(19) Europäisches Patentamt

European Patent Office

Office européen des brevets

(11) **EP 4 144 226 A1**

(12) # EUROPEAN PATENT APPLICATION
published in accordance with Art. 153(4) EPC

(43) Date of publication:
**08.03.2023 Bulletin 2023/10**

(21) Application number: **21847446.8**

(22) Date of filing: **21.10.2021**

(51) International Patent Classification (IPC):
*A23L 7/196* (2016.01)    *A23L 5/10* (2016.01)
*A23L 29/10* (2016.01)    *A23L 23/00* (2016.01)

(86) International application number:
**PCT/KR2021/014827**

(87) International publication number:
**WO 2023/286921 (19.01.2023 Gazette 2023/03)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **13.07.2021 KR 20210091639
20.10.2021 KR 20210140587**

(71) Applicant: **CJ Cheiljedang Corporation
Seoul 04560 (KR)**

(72) Inventors:
• **OH, Ye Jin
Seoul 04560 (KR)**

• **LEE, Eun Jee
Seoul 04560 (KR)**
• **KIM, Hyung Su
Seoul 04560 (KR)**
• **CHOI, So Mang
Seoul 04560 (KR)**
• **YOON, In Won
Seoul 04560 (KR)**
• **JEONG, Hyo Young
Seoul 04560 (KR)**
• **KIM, Sang You
Seoul 04560 (KR)**

(74) Representative: **Hutter, Anton et al
Venner Shipley LLP
5 Stirling House
Stirling Road
The Surrey Research Park
Guildford GU2 7RF (GB)**

(54) **METHOD FOR MANUFACTURE OF INSTANT RICE, USING SUPERHEATED STEAM**

(57)    The present application relates to a method for preparing instant cooked grains and instant cooked grains prepared thereby, wherein superheated steams is used during a cooking process to prevent grains from popping, so that instant cooked grains with excellent appearance quality and improved hardness and texture are provided.

**[FIG. 1]**

EP 4 144 226 A1

**Description**

## TECHNICAL FIELD

The present application relates to a method for preparing instant cooked grains and instant cooked grains prepared thereby.

## BACKGROUND ART

Cooked grains are a staple food in East Asia such as Korea, Japan, and China, and are a food commonly consumed throughout Asia, including Southeast Asia and South Asia. In recent years, the population consuming cooked grains has increased not only in Asia but also in the Western world, making cooked grains a popular food in the Western world as well. Particularly, as it has been known that rice, a main raw material of cooked grains, is nutritionally excellent, cooked grains are now more popular.

Typically, cooked grains may be cooked and prepared by washing and soaking grains such as rice with water, followed by draining the grains and heating the drained grains. However, in order to cook cooked grains properly, it is important to accurately measure and use an amount of water according to an amount of grains, and depending on conditions and methods of heating, the taste and texture of finally prepared cooked grains may greatly vary. Therefore, it requires skilled workmanship or experience to prepare cooked grains of a certain level or above. Since it is not easy to cook cooked grains with constant and excellent quality, electric rice cookers for the purpose of preparing cooked grains alone have been developed. Since cooked grains are a type of food consumed as a staple food, the cooked grains need to be cooked daily or cooked in large quantities. However, there is a disadvantage in that the process of cooking the cooked grains is cumbersome and not easy. Particularly, in response to the recent trend in which the number of single-person households is increasing and the eating-out culture is developing, fewer and fewer people are looking to make cooked grains at home going through the above cumbersome process. On the contrary, the demand for instant cooked grains in the form of instant food is increasing. Korean Patent Application Laid-Open No. 10-2016-0077661 discloses puffed rice for instant cooked grains and a preparation method thereof, wherein puffed rice for instant cooked grains and a preparation method in which a three-step cooking process and an aging treatment process are included, an emulsifier and an additive are not used, and a cooling process is omitted are proposed. However, a method for preparing instant cooked grains by using superheated steam is not disclosed.

[Prior Art Document]

[Patent Document]

Korean Patent Laid-Open Publication No. 10-2016-0077661

## DISCLOSURE OF THE INVENTION

## TECHNICAL PROBLEM

An aspect of the present application is to provide a method for preparing instant cooked grains by using superheated steam cooking.

Another aspect of the present application is to provide instant cooked grains prepared by the method for preparing instant cooked grains by using superheated steam cooking.

## TECHNICAL SOLUTION

According to an aspect of the present application, there is provided a method for preparing instant cooked grains, the method including washing raw materials and immersing the raw materials in water, wherein the raw materials include rice and one or more grains other than rice, cooking the immersed raw materials by using superheated steam, sealing a container containing the cooked raw materials, and retort heating the sealed container.

According to another aspect of the present application, there is provided instant cooked grains prepared by the above preparation method of instant cooked grains.

Hereinafter, the present application will be described in detail.

In the present application, the term "cooked grains, or Bap" refers to foods in general which are prepared by adding water to grains, and then pressurizing and heating the grains. Compared to porridge, cooked grains retain the granule shape of grains, and thus, are characterized by being consumed by chewing and having less moisture than the porridge. The cooked grains may be typically consumed as a staple food in East Asia and Southeast Asia, including South Korea. Although the cooked grains are mainly prepared by using rice, the cooked grains may be prepared by using other grains than rice, may be prepared by mixing rice with other grains, or may be prepared by using additional materials in addition to grains.

In the present application, the term "instant cooked grains" refers to cooked grains in the form of instant food. The instant cooked grains may be consumed by themselves without a separate cooking process, or may be consumed through a simpler cooking process compared to a typical method for preparing and cooking cooked grains, and is a processed food prepared to be conveniently kept, stored, transported, and carried.

In the present application, the term "superheated steam" refers to steam made by further heating water vapor under atmospheric pressure conditions to be in a state of being at a saturated temperature or higher . Specifically, superheated steam may have a temperature of 100°C or higher.

The method for preparing instant cooked grains of the present application includes washing raw materials and immersing the raw materials in water, wherein the raw materials include rice and one or more grains other than rice, cooking the immersed raw materials by using superheated steam, sealing a container containing the cooked raw materials, and retort heating the sealed container.

The cooked grains prepared by the preparation method of the present application are cooked by using superheated steams to prevent grains from popping, and thus, have excellent appearance quality and improved hardness and texture.

Step of washing raw materials and immersing raw materials in water, wherein raw materials include rice and one or more grains other than rice

The rice may include at least one selected from the group consisting of white rice, black rice, brown rice, non-glutinous rice and glutinous rice.

As long as it is typically used in the preparation of cooked grains, any rice may be used regardless of the type thereof as "rice," which is a concept including the white rice, the black rice, the brown rice, and the like.

In addition, the rice may be non-glutinous rice, glutinous rice, or a combination thereof. The starch component of the non-glutinous rice may be amylose and amylopectin, and the starch component of the glutinous rice may be amylopectin. Compared to the non-glutinous rice, the glutinous rice may exhibit stronger glutinousness when cooked. In addition, the rice may be used regardless of its degree of milling, and may be 5%-milled rice, 7%-milled rice, and/or 9%-milled rice in addition to the white rice and the brown rice. The types of rice described above may be appropriately selected according to the type and properties of cooked grains to be finally prepared, and the mixing ratio of each type of rice may be appropriately selected and used.

In addition, the rice may include long-grain indica rice, short-grain or medium-grain japonica rice.

The long-grain indica rice may specifically include varieties of basmati, jasmine, or Nang hoa, but is not limited thereto.

The short-grain japonica rice may specifically include varieties of GABA rice, Koshihikari, a single variety, or Shindongjin, or Kalos, but is not limited thereto.

Grains other than the rice may include mixed grains. The mixed grains may be any mixed grains which may be typically used in the preparation of mixed cooked grains or nutritious cooked grains. The mixed grains may include, for example, at least one selected from the group consisting of barley, bean, red bean, Italian millet, wheat, rye, barnyard millet, buckwheat, oat, hog millet, corn and sorghum.

In the present application, raw materials for instant cooked grains may further include raw materials which may be typically used to prepare cooked grains other than the above-described rice and mixed grains. That is, instant cooked grains prepared by the method of the present application may be prepared by using raw materials including rice, prepared by using raw materials including grains other than rice, or prepared by further including other raw materials other than rice and grains (grains other than rice).

The other raw materials other than rice and grains (grains other than rice) may include any material which may be typically used in the preparation of cooked grains. Depending on the type of cooked grains to be prepared, the types of the raw materials may be appropriately selected and used.

Specifically, the raw materials may further include at least one selected from the group consisting of beans, mushrooms, roots and tubers, bulbs and tubers, vegetables, fruits, seeds and nuts, meat, fish meat, and eggs.

The beans may include all edible plants classified as legumes, and may include, for example, at least one selected from the group consisting of white bean, green flesh black bean, black bean, yellow bean, black soybean, kidney bean, pea, gray bean, mung bean, lentil, sword bean, and red bean, but are not limited thereto. The mushrooms may be any edible mushrooms used in the preparation of mushroom cooked grains, and may include, for example, king oyster mushroom, shiitake mushroom, oyster mushroom, button mushroom, and enoki mushroom, but are not limited thereto. The bulbs and tubers may include at least one selected from the group consisting of lotus root, burdock root, carrot, and bellflower root, but are not limited thereto. The roots and tubers may include at least one selected from the group consisting of sweet potato, potato, and sunchoke, but are not limited thereto. The vegetables may include at least one selected from the group consisting of aster leaves, thistle leaves, bracken, sedums, Fischer's ragwort, chives, wild chives, butterbur leaves, Alpine leeks, purslane leaves, and angelica-tree shoots, but are not limited thereto. The fruits or seeds and nuts may include at least one selected from the group consisting of jujubes, chestnuts, pine nuts, raisins, and pumpkin seeds, but are not limited thereto. The meat may include lean meat, muscle, fat, or a mixture thereof, separated from at least one animal selected from the group consisting of cows, horses, sheep, goats, deer and poultry (chickens, ducks, geese, turkeys, ostriches, and ringneck pheasants), but is not limited thereto. The fish meat includes meat separated from aquatic products, roes of aquatic products, or processed foods thereof, and may be, for example, raw meat separated from aquatic products, tender meat, fish cakes, fish meat sausages, and the like, but is not limited thereto. The aquatic products may be fishes (cod, pollock, yellow corbina, mackerel, Spanish mackerel, mackerel pike, etc.), squid, small octopus, octopus, shrimp, crab, shellfish mean, and the like, and roes of the aquatic products may be pollack roes, cod roes, flying fish roes, shark roes, and the like, but are not limited thereto. The eggs include eggs obtained from animals, such as poultry eggs or food products produced by using processed eggs as raw materials, and may include eggs, whole eggs, egg yolks, egg whites, and the like. Specifically, the eggs may be chicken eggs, duck eggs, quail eggs, goose eggs, ostrich eggs, or processed products thereof, but are not limited thereto.

The step of washing raw materials and immersing the same may include at least one process selected from the group consisting of washing, immersing, and draining raw materials. More specifically, the washing step may be washing in a shower manner in which water is sprayed through a water nozzle, at which time foreign substances attached to the surfaces of raw materials may be removed. The immersing step is a process of immersing raw materials in water to soak the raw materials with water, and may be performed by immersing in water at a temperature of 30°C to 55°C, 40°C to 55°C, 35°C to 50°C, or 40°C to 50°C, but is not limited thereto. The draining step is removing water from the immersed raw materials, and may be, for example, a process of removing moisture by using a sieve. When the draining step is performed, there is an advantage in that the moisture deviation between raw materials may be reduced.

Step of cooking immersed raw materials by using superheated steam

The step of cooking by using superheated steam includes a process of applying superheated steam to the raw materials.

The step of cooking by using superheated steam may include adding water to the raw materials.

In the step of cooking by using superheated steam, the process of applying superheated steam to the raw materials and the process of adding water to the raw materials may be simultaneously performed.

The process of adding water to the raw materials may be performed simultaneously with the process of applying superheated steam. However, the process of adding water may be performed through an individual apparatus separate from the process of applying superheated steam.

An apparatus for applying superheated steam and an apparatus for adding water may be apparatuses different from each other.

In the step of adding water, the adding of water may be performed in a spraying manner.

The adding of water in a spraying manner may be performed through a spray nozzle.

The step of adding of water may be performed through one single spray nozzle, or 2 to 10, 2 to 8, 2 to 6, or 2 to 5 multiple spray nozzles, but is not limited thereto. The positions multiple nozzles in the multiple spray nozzles may be changed according to the amount of added water and conditions of adding water.

In the step of adding water, the water may be added in an amount of 0.01 ℓ/min to 10 ℓ/min per one spray nozzle, and specifically, may be added in an amount of 0.01 ℓ/min to 10 ℓ/min, 0.05 ℓ/min to 10 ℓ/min, 0.1 ℓ/min to 10 ℓ/min, 0.3 ℓ/min - 10 ℓ/min, 0.5 ℓ/min to 10 ℓ/min, 0.7 ℓ/min to 10 ℓ/min, 1 ℓ/min - 10 ℓ/min, 0.01 ℓ/min to 5 ℓ/min, 0.05 ℓ/min to 5 ℓ/min, 0.1 ℓ/min to 5 ℓ/min, 0.3 ℓ/min - 5 ℓ/min, 0.5 ℓ/min to 5 ℓ/min, 0.7 ℓ/min to 5 ℓ/min, 1 ℓ/min - 5 ℓ/min, 0.01 ℓ/min to 3 ℓ/min, 0.05 ℓ/min to 3 ℓ/min, 0.1 ℓ/min to 3 ℓ/min, 0.3 ℓ/min - 3 ℓ/min, 0.5 ℓ/min to 3 ℓ/min, 0.7 ℓ/min to 3 ℓ/min, or 1 ℓ/min to 3 ℓ/min.

In the step of adding water, when the water is added through a multiple spray nozzles, each spray nozzle may add an amount water corresponding to the above range. For example, when three multiple spray nozzles are used, each spray nozzle may respectively add water in an amount of 1 ℓ/min, 1 ℓ/min, and 0.3 ℓ/min, but is not limited thereto.

In the step of cooking by using superheated steam, the temperature of the superheated steam may be 110°C to 130 °C. Specifically, the temperature of the superheated steam may be 110°C to 130°C, 115°C to 125°C, 120°C to 130°C, 110°C to 120°C, 110°C to 125°C, 125°C to 130°C, or 120°C to 125°C, but is not limited thereto.

The step of cooking by using superheated steam may be performed for 2 minutes to 15 minutes. Specifically, the cooking time may be 2 minutes to 15 minutes, 3 minutes to 14 minutes, 3 minutes to 13 minutes, 4 minutes to 12 minutes, 5 minutes to 12 minutes, 6 minutes to 12 minutes, 7 minutes to 11 minutes, or 9 minutes to 11 minutes, but is not limited thereto.

The yield of semi-finished cooked grains obtained after the superheated steam cooking may be 145% to 190%.

The term "semi-finished cooked grains" refers to cooked grains in a medium-cooked state obtained after cooking by using superheated steam, and refers to cooked grains in a state before retort heating treatment, which is a subsequent step.

The term "yield" refers to the ratio of the weight of the semi-finished cooked grains to the weight of the raw materials before washing, and may be calculated by the following equation.

$$\text{Yield} = [\text{Weight of semi-finished cooked grains}]/[\text{Weight of raw materials before washing}] \times 100$$

In the superheated steam cooking step, an amount of added water may be controlled such that the yield of the semi-finished cooked grains obtained after cooking by using superheated steam is to be 145% to 190%.

In addition, the water adding ratio of semi-finished cooked grains obtained after the superheated steam cooking may be 45% to 90%.

The term "water adding ratio" refers to the ratio of the amount of absorbed moisture contained in the semi-finished cooked grains obtained through the superheated steam cooking process compared to the instant cooked grains raw materials before washing, and may be calculated by the following equation.

$$\text{Water adding ratio} = [(\text{Weight of semi-finished cooked grains}) - (\text{Weight of raw materials before washing})]/[\text{Weight of raw materials before washing}] \times 100$$

In the superheated steam cooking step, an amount of added water may be controlled such that the water adding ratio of the semi-finished cooked grains obtained after cooking by using superheated steam is to be 45% to 90%.

Meanwhile, in a specific embodiment of the present application to be described layer, the weight of semi-finished cooked grains obtained after cooking raw materials by using superheated steam is expressed as a yield itself.

For example, when the weight of cooked grains in a semi-finished state obtained after washing, immersing, and draining 300 g of rice, which is a raw material, and then adding water to the rice at the same time as superheated steam cooking the rice is 510 g, the yield may be expressed as 510 g in the experimental data of the specific embodiment of the present application. Such a yield may also be expressed as 170%, which is a yield calculated by the above-described equation [510/300]X100, and may also be expressed as 70%, which is a water adding ratio calculated by the above-described equation [(510-300)]/300 X 100.

In the present application, the water adding ratio of the instant cooked grains may be 45% to 90%, and specifically, may be a water adding ratio within a range consisting of a lower limit selected from the group consisting of 45%, 46%, 47%, 48%, 49%, 50%, 51%, 52%, 53%, 54%, 55%, 56%, 57%, 58%, 59%, and 60%, and an upper limit selected from the group consisting of 90%, 89%, 88%, 87%, 86%, 85%, 84%, 83%, and 82%. More specifically, the water adding ratio of the instant cooked grains may be 45 to 90%, 47 to 90%, 48 to 90%, 49 to 90%, 50 to 90%, 51 to 90%, 52 to 90%, 53 to 90%, 54 to 90%, 55 to 90%, 56 to 90%, 57 to 90%, 58 to 90%, 45 to 87%, 46 to 87%, 47 to 87%, 48 to 87%, 49 to 87%, 50 to 87%, 51 to 87%, 52 to 87%, 53 to 87%, 54 to 87%, 55 to 87%, 56 to 87%, 57 to 87%, 58 to 87%, 45 to 85%, 45 to 85%, 47 to 85%, 48 to 85%, 49 to 85%, 50 to 85%, 51 to 85%, 52 to 85%, 53 to 85%, 54 to 85%, 55 to 85%, 56 to 85%, 57 to 85%, 58 to 85%, 45 to 83%, 45 to 83%, 47 to 83%, 48 to 83%, 49 to 83%, 50 to 83%, 51 to 83%, 52 to 83%, 53 to 83%, 54 to 83%, 55 to 83%, 56 to 83%, 57 to 83%, or 58 to 83%.

When the water adding ratio of the semi-finished product is lower than the above-described lower limit value, the amount of water added to meet an amount of moisture required in a final finished product before the retort heating process to be described later is increased, so that there may be problem in that the quality of cooked grains, which is a final product, may be degraded. For example, there may be problem in that the cooked grains become agglomerated. When the water adding ratio of the semi-finished product is higher than the above-described upper limit value, grains the cooked grains may pop due to an excessive moisture content.

In addition, the moisture content of the semi-finished cooked grains obtained after the superheated steam cooking may be 35% to 58%, and may specifically be, 35% to 58%, 36% to 58%, 37% to 58%, 37% to 57%, 37% to 56%, 37%to55%, 36% to 55%, 36% to 54%, 37% to 54%, 37% to 53%, 38% to 53%, or 39% to 53%.

The term "moisture content of semi-finished cooked grains" refers to the ratio of the amount of moisture contained in the semi-finished rice after the superheated steam cooking to the weight of the semi-finished cooked grains, and may be calculated by the following equation.

$$\text{Moisture content of semi-finished cooked grains} = [\text{Moisture content in raw materials} + ((\text{Weight of semi-finished cooked grains}) - (\text{Weight of raw materials before washing}))] / [\text{Weight of semi-finished cooked grains}] \times 100$$

In the superheated steam cooking step, an amount of added water may be controlled such that the moisture content of the semi-finished cooked grains obtained after the cooking by using superheated steam is to be 35% to 58%, 36% to 58%, 37% to 58%, 37% to 57%, 37% to 56%, 37%to55%, 36% to 55%, 36% to 54%, 37% to 54%, 37% to 53%, 38% to 53%, or 39% to 53%.
In the superheated steam cooking step, the control of an amount of added water may be performed, for example, by controlling a spraying amount of the above-described nozzle.

Step of adding cooking water to container containing cooked raw materials

The raw materials obtained by the superheated steam cooking may be placed in a container, and then cooking water may be further added to the container. The raw materials obtained by the superheated steam cooking may be cooked grains in a semi-finished state.
The amount of additional cooking water may be controlled and added such that the moisture content of instant cooked grains, which is a final product, is to be 55% to 65%. Specifically, the amount of cooking water may be controlled and added such that the moisture content of instant cooked grains, which is a final product, is to be 55% to 65%, 56% to 65%, 57% to 65%, 58% to 65%, or 59% to 65%.
The temperature of the additional cooking water is not particularly limited, but may be, for example, 30°C to 45°C.
The cooking water may be mixed with a sauce to be described layer and then added to the container.

Step of sealing container containing cooked raw materials

The sealing step may further include the step of the step of injecting an inert gas into a container before sealing. The sealing of a container may be performed by a method of using heat, a method of using an adhesive, or a method of using pressure, but is not limited thereto. After the sealing step, external foreign substances or microorganisms cannot be introduced to the container in a natural manner, so that it is possible to control microbial contamination. As the container and a lid material used in the preparation method of instant cooked grains of the present application, any container and any lid material may be used without limitation in the type, material, size, and the like thereof as long as they may be typically used in the preparation of instant food, and they may be a container and a lid material which are not deformed or damaged by heating to be performed later. For example, the lid material may be a lid film, but is not limited thereto.

Step of retort heating sealed container

The step of retort heating may include heating the sealed container at a temperature of 110°C to 130°C for 10 minutes to 35 minutes. Specifically, the temperature may be 110°C to 130°C, 115°C to 125°C, 120°C to 130°C, 110°C to 120°C, 110°C to 125°C, 125°C to 130°C, or 120°C to 125°C, but is not limited thereto. The duration may be 10 minutes to 25 minutes, 12 minutes to 33 minutes, 13 minutes to 32 minutes, 14 minutes to 30 minutes, 15 minutes to 30 minutes, or 16 minutes to 29 minutes, but is not limited thereto. The retort heating step may include a process in which the container continuously rotates 360 degrees during a temperature raising process.
The retort sterilization level may be a level in which a F0 value is 5 to 9. In the present application, the term "F value" refers to the time required to kill a specific microbial strain at a specific temperature, which may be calculated through the thermal death time curve for a microorganism. The F value may be determined according to the Z value and the heating temperature according to the type of a microorganism to be sterilized. Among them, the "F0 value" may be defined as an F value when the Z value is 18°F or 10°C and the heating temperature is 250°F or 121.1°C. The Z value of 10°C is based on a numerical value when a standard microorganism strain is a target of sterilization. The F0 value is a numerical value which may be used as a measure representing the level of sterilization in the art. The F0 value may be measured with a probe of a sensor which measured an accumulated amount of heat transferred to a sample during heat treatment. For example, the F0 value may be measured by inserting a probe of a sensor into a cold point (a point at which heat is transferred last in a sample or typically the center of the sample) in a sample, and then checking an accumulated amount of heat transferred during heating, and may be calculated by setting an amount of heat corresponding to 121.1°C and 1 minute to 'F0 = 1' and converting based on the set value. In the preparation method of instant cooked grains of the present application, the retort heating step may be to sterilize under the condition of a F0 value of 5 to 9. At this time, if exemplarily described, the meaning of sterilizing under the condition of 'F0 value = 5' is that when sterilization is performed for 5 minutes at a temperature of 121.1°C on a standard microorganism having a Z value of 10°C according to the definition of the F0 value, sterilization is performed to a level which may kill the microorganism. The F0 value may be calculated by Equation 1 below.

[Equation 1]

$$F_0 = t(time) \times 10^{\,T(temperature)-121.1°C/10°C}$$

In Equation 1 above, the unit of t (time) is minutes (min), and the unit of T (temperature) is °C.

Specifically, as a result of the retort heating, sterilization may be performed to a level at which the F0 value is 5 to 9, 6 to 8, 7 to 8, or 6 to 7, but is not limited thereto.

Process of adding emulsifier

The preparation method of instant cooked grains of the present application may further include the step of adding an emulsifier. The emulsifier may be a sunflower emulsifier, lecithin, glycerin fatty acid ester, polysorbate, sucrose fatty acid ester, sodium polyphosphate, sodium caseinate, sodium citrate, sodium alginate, sorbitan fatty acid ester, propylene glycol fatty acid ester, polyglycerin fatty acid ester, or a combination thereof, but is not limited thereto.

The emulsifier may be added before the step of cooking by using superheated steam or after the step of cooking by using superheated steam.

The emulsifier may be added by spraying the emulsifier by using a spray nozzle, but is not limited thereto.

The emulsifier may be added in the form of an emulsion containing the emulsifier at a certain concentration, and the emulsion may contain the emulsifier at a concentration of 1 to 5 wt%. More specifically, the concentration of the emulsifier in the emulsion may be 4 to 8 wt%, 4.5 to 8 wt%, 4 to 7.5 wt%, 5 to 7 wt%, 5.5 to 6.5 wt%, 5.5 to 6 wt%, or 6 to 6.5 wt%, but is not limited thereto.

The emulsifier may be added to raw materials to be included to a final a concentration of 0.1 to 0.5 wt% based on dry raw materials, and specifically, may be added to a concentration of 0.1 to 0.5 wt%, 0.2 to 0.4 wt%, 0.2 to 0.3 wt%, or 0.2 to 0.25 wt%.

According to a specific embodiment of the present application, the preparation method of instant cooked grains of the present application may be performed by spraying and adding an emulsifier to raw materials before superheated steam cooking, adding water through spraying during the cooking process by using superheated steam, spraying and adding an emulsifier and/or a sauce to the raw materials cooked by using superheated steam, and then introducing and filling a solid material in a container.

Since the emulsifier is sprayed and added, there is an effect of facilitating the filling of cooked grains.

Process of mixing sauce

The preparation method of instant cooked grains of the present application may further include the step of mixing a sauce with the raw materials.

The step of mixing a sauce with the raw materials may be performed after the step of cooking by using superheated steam.

In one embodiment, the step of mixing a sauce with the raw materials may be performed after the step of cooking by using superheated steam and before the step of sealing a container containing the cooked raw materials.

As the sauce, any sauce which may be used in the preparation of cooked grains may be applied without limitation. For example, the sauce may be a sauce in a powder form or a liquid form, but is not limited thereto. Specifically, the sauce may include curry, a soy sauce, garlic, green onion, sugar, salt, sesame oil, honey, or a combination thereof, but is not limited thereto.

The step of mixing a sauce with the raw materials may be mixing the sauce with cooking water and then adding the sauce mixed with the cooking water.

In addition, the step of mixing a sauce with the raw materials may be mixing a portion of the sauce with the raw materials cooked by using superheated steam, and then mixing the other portion of the sauce with cooking water to be added.

The preparation method of instant cooked grains of the present application may further include the step of adding an additional raw material other than rice after the step of cooking by using superheated steam. Specifically, when the instant cooked grains of the preparation method are seasoned cooked grains, the step of adding an additional raw material (solid material) may be further included after the step of cooking by using superheated steam.

Inversion process

The preparation method of instant cooked grains of the present application may further include the step of inverting the sealed container after the sealing step.

The inverting step refers to a process of turning the sealed container upside down, and the inversion may be repeatedly performed once to 5 times. Specifically, the inversion may be performed once to 5 times, once to 4 times, 2 times to 3 times, or 2 times, but is not limited thereto.

The inverting step may be turning the container upside down after the sealing and then leaving the container to stand for 3 minutes to 8 minutes, 4 minutes to 7 minutes, or 4 minutes to 6 minutes, followed by putting the container back to its original position.

The inverting step may be performed after adding a sauce before the sealing, waiting for 1 minute to 5 minutes, 2 minutes to 4 minutes, or 2 minutes and 30 seconds to 3 minutes to 30 seconds, and then performing the sealing process.

Container

The container may be either a pouch or a tray-type container.

The pouch is a flexible and sealable food container, and for example, may be manufactured by using plastic or foil, but is not limited thereto. The tray-type container is a food container in a fixed form with relatively less flexibility, and may be sealed through a separate lid material, but is not limited thereto. Regardless of the shape, size, material, and the like of the container, any container may be applied without limitation as long it is suitable for filling food, particularly instant cooked grains.

When the container is a pouch, the step of rotating the sealed pouch and/or the step of inverting the same may not be included.

When the container is a tray-type container, the step of rotating the sealed tray-type container, the step of inverting the tray-type container, or a combination thereof may be further included, and the step of rotating the sealed pouch and the step of inverting the sealed pouch may not be included.

After cooked by using superheated steam, the raw materials may be filled in a pouch.

Before the step of cooking by using superheated steam, the raw materials may be filled in a tray-type container.

The preparation method of instant cooked grains of the present application may further include the step of cooling and drying after the retort heating step, and may further include the step of inspecting the appearance and state of the prepared instant cooked grains and/or the step of packaging one or more instant cooked grains. The cooling step may be cooling by a refrigerating chamber or an air conditioner, but is not limited thereto. For example, the cooling step may be to cool an instant cooked grains product to a temperature of 30°C to 50°C, 35°C to 45°C, or 38°C to 42°C, but is not limited thereto. The inspection step may be a visual inspection or a sampling inspection, but is not limited thereto.

Instant cooked grains

Another aspect of the present application provides instant cooked grains prepared by the above-described preparation method of instant cooked grains.

Cooked grains of the instant cooked grains may be any one selected from the group consisting of cooked rice, mixed grains, seasoned cooked grains.

The cooked rice refers to cooked grains prepared by using only rice as a raw material, and may not use grains other than rice as raw materials. For example, the cooked rice may be white rice cooked grains, black rice cooked grains, brown rice cooked grains, or the like, but is not limited thereto.

The mixed cooked grains refer to cooked grains prepared by using mixed grains other than rice as raw materials, and may be prepared by using only the mixed grains, or may be prepared by using both mixed grains and rice. Descriptions of the rice and the mixed grains are the same as those described above, and thus, will not be repeated.

For example, the mixed cooked grains may be barley cooked grains, bean cooked grains, whole grain cooked grains, mixed grains of barley, bean, sorghum, Italian millet, and the like, or the like but is not limited thereto, and may include any cooked grains including mixed grains.

The seasoned cooked grains may be prepared by adding another ingredient to add savor to cooked grains prepared by using rice or grains other than rice, and for example, may be prepared by adding an ingredient such as a sauce, meat, and seafood. For example, the seasoned cooked grains may be Kimchi seasoned cooked grains, seafood seasoned cooked grains, chicken garlic black bean sauce seasoned cooked grains, nutritious cooked grains, mushroom nutritious cooked grains, medicinal cooked grains, and the like depending on the type of an ingredient to be added, but is not limited thereto.

## ADVANTAGEOUS EFFECTS

The present application relates to a method for preparing instant cooked grains and instant cooked grains prepared thereby, wherein superheated steams is used during a cooking process to prevent grains from popping, so that instant cooked grains with excellent appearance quality and improved hardness and texture may be provided. However, effects of the present application are not limited to the effects mentioned above, and other effects not mentioned will be clearly understood by those skilled in the art from the following description.

## BRIEF DESCRIPTION OF THE DRAWINGS

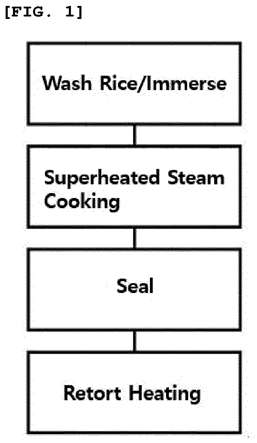

FIG. 1 is a schematic diagram of an aspect of a method for preparing instant cooked grains of the present application;

FIG. 2 shows a process diagram for an aspect of preparing instant cooked grains by including an inverting step by using a long grain variety and jasmine as raw materials in a method for preparing instant cooked grains of the present application;

FIG. 3 shows a process diagram for an aspect of a method for preparing seasoned cooked grains in a method for preparing instant cooked grains of the present application;

FIG. 4 shows the comparison of appearances of grains of a semi-finished product cooked by boiling (Comparative Example 1-1), a semi-finished product cooked by using atmospheric steam (Comparative Example 1-2), and a semi-finished product cooked by using superheated steam;

FIG. 5 shows the comparison of appearances of grains in a semi-finished state according to each of Example 2-1 and Example 2-2, wherein the left is cooked with superheated steam of a temperature of 105°C and the right is cooked with superheated steam of a temperature of 125°C;

FIG. 6 shows the comparison of appearances of instant cooked grains of each of Example 3-1 to Example 3-3, and from the left to the right are the results of not adding water during superheated steam cooking, adding water from one spray nozzle at a rate of 1.0 ℓ/min, and adding water from three spray nozzles at a rate of 1.0/1.0/0.3 ℓ/min, respectively; and

FIG. 7 shows the appearance and degree of grain separation (%) of grains of instant cooked grains of each of Examples 5-1 to 5-3 prepared by using long-grain jasmine depending on whether an emulsifier is sprayed or not and the time of spraying the emulsifier.

## MODE OF IMPLEMENTATION OF THE INVENTION

Hereinafter, the present application will be described in detail with reference to an embodiment. However, the following embodiment is merely illustrative of the present application, and the contents of the present application are not limited by the following embodiment.

**Examples**

**Experimental Example** 1: **Comparison of physical properties of instant cooked grains each cooked by boiling, atmospheric steam, and superheated steam**

1. Preparation of instant cooked grains

The physical properties of each of instant cooked grains (Example 1) prepared through cooking by using superheated steam, instant cooked grains (Comparative Example 1-1) prepared through typical boiling cooking, and instant cooked grains (Comparative Example 1-2) prepared through atmospheric steam cooking were compared.

First, in order to prepare cooked grains through typical boiling cooking, 300 g of a long-grain variety (Vietnamese Indica rice, Dubo Food) was washed and then boiled in boiling water for 3 minutes in an unsoaked state to prepare cooked grains. Thereafter, the weight of the rice was measured to confirm the amount of moisture absorbed by the rice.

In order to prepare instant cooked grains through cooking by using atmospheric steam, 300 g of a long-grain variety (Vietnamese annammi, Dubo Food) was washed and then soaked at 40°C for 40 minutes. Thereafter, the rice was well drained by using a sieve, and then placed in a stainless tray. Here, water as much as the amount of moisture absorbed by the rice measured in the above-described boiling cooking method was added to the tray. Thereafter, the stainless tray was covered with foil, and then placed in an atmospheric steam cooker (Jinil Automation) to be cooked for 10 minutes.

Lastly, in order to prepare instant cooked grains through cooking by using superheated steam, soaked rice was drained in the same manner as described in the method by using atmospheric steam, and then introduced to a superheated steam cooker to a thickness of 2 cm. At this time, the temperature of the superheated steam cooker was set to 125°C, and the travel time of a conveyor passing through the superheated steam cooker was set to 10 minutes. Water as much as the amount of moisture absorbed by the rice measured in the above-described boiling cooking method was sprayed by using a nozzle in the superheated steam cooker.

Cooked grains cooked by each of the methods were placed in a container, and water was added thereto such that the moisture content of a final instant cooked grains product was to be 60%, followed by sealing the container. Retort heating was performed under the conditions of 122°C and 21 minutes, and the container was rotated at 1 rpm in a temperature raising section.


2. Physical properties analysis of instant cooked grains

The instant cooked grains of each of Example 1, Comparative Example 1-1, and Comparative Example 1-2 were prepared according to the cooking methods described above, and the physical properties thereof were measured and compared.

First, during the processes of preparing the instant cooked grains, a yield was measured for each cooked grains in a semi-finished state after the superheated steam cooking, boiling cooking, and atmospheric steam cooking and before the retort heating, and the appearances of grains were observed. The yield after the cooking refers to the weight of 300 g of raw materials after being cooked by the above method. The pretreatment yield and filling amount of each instant cooked grains in the semi-finished state are as shown in Table 1 below.

[Table 1]

|  | Yield after cooking |
| --- | --- |
| Comparative Example 1-1 (boiling cooking) | 630 g |
| Comparative Example 1-2 (atmospheric steam cooking) | 602 g |
| Example 1 (superheated steam cooking) | 498 g |

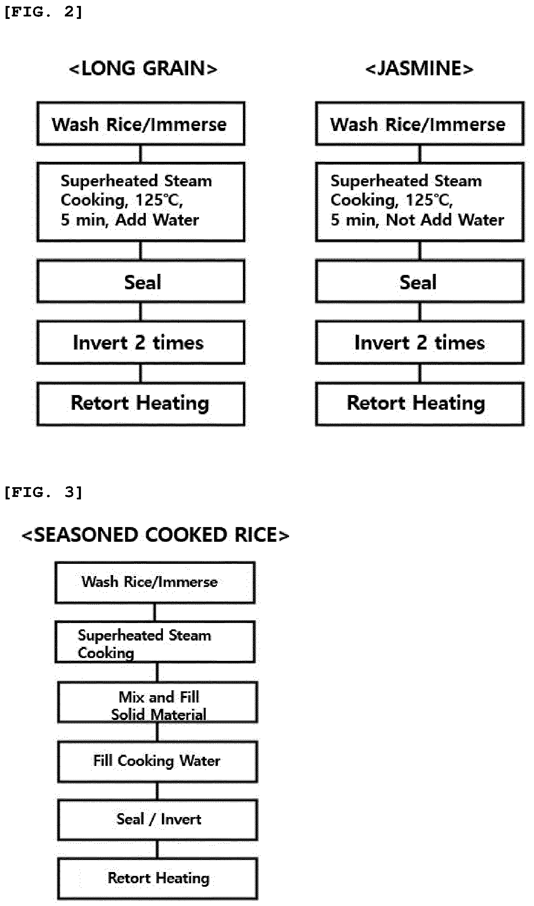

According to the results in Table 1, the boiling cooking or the atmospheric steam cooking showed a high yield after the cooking since grains were soaked too much in water before being cooked. Since the grains were soaked too much in water, a phenomenon in which grains pop may be more prominent later. On the other hand, Example 1 cooked by using superheated steam showed a low yield after the cooking. Grains thereof were not soaked as much compared to those of Comparative Examples, so that it was confirmed that there was an effect in that the phenomenon in which grains pop occurred less. As a result of observing the appearance of the grains of each semi-finished product, as shown in FIG. 2, the surfaces of grains cooked by boiling (Comparative Example 1-1) were appeared to be less glossy and more rough. This is presumed to be due to the loss of a surface water retaining film as the rice was immersed in water. In the case of atmospheric steam cooking (Comparative Example 1-2), there was a difference in the degree of gelatinization between a portion of the rice immersed in the cooking water and an upper portion thereof not immersed therein, so that the sizes of grains were not uniform, and grains cracked along a vertical axis were observed. On the contrary, in the case of the superheated steam cooking according to the present application (Example 1), the intactness of the surfaces of the grains was the highest, and the overall appearance of the grains was uniform, so that it was confirmed that the physical properties related to the state of surfaces observed from the outside were most excellent.

In addition, for the instant cooked grains in a finished product state subjected to the retort heating, the physical properties related to hardness, resilience, adhesion, and stickiness were measured and chromaticity color differences were measured to compare colors, and also, sensory evaluation was performed to confirm the properties related to grain appearance, texture, and overall taste.

In order to measure the physical properties such as hardness, resilience, adhesion, and stickiness, the texture profile analysis (TPA) was performed by using a physical property analyzer (Tensipresser Analyzer, MyBoy, TAKETOMO Electric Incorporated), and a TPA curve obtained after 6 bites was used. Each sample was placed in a holder of the physical property analyzer, and a plunger of a 30 mm height was moved with a constant force and rate of 2.0 mm/s to apply force to the surface of the sample. 24% compression of the thickness of the sample was applied twice, 46% compression was applied twice, and 92% compression was applied twice in succession up and down to measure the load on the plunger. The hardness was measured by using a peak value when the plunger was compressed to 92% of the thickness of the sample, which represents the force required to chew and crush cooked grains. The resilience was measured by dividing the are of a curve at the time of 92% compression by the area of a curve at the time of 24% compression, and the higher the resilience value, the higher the chewing resilience of the cooked grains. The adhesion may be measured by using a negative peak value when the plunger compresses the sample by 92%, which represents the force at the moment when the plunger stuck to the sample is detached. The larger the measured value, the higher the adhesion. The stickiness may be measure by using a negative area when the plunger compresses the sample by 92%, which represents sustained sticking force. Each numerical value shown represents an average value obtained after repeating the measurements 5 times each.

[Table 2]

|  | Hardness | Resilience | Adhesivene ss | Glutinousnes s |
|---|---|---|---|---|
| Comparative Example 1-1 (boiling cooking) | 46.74 | 57.79 | 5.76 | 11.97 |
| Comparative Example 1-2 (atmospheric steam cooking) | 71.66 | 78.44 | 5.82 | 13.82 |
| Example 1 (superheated steam cooking) | 74.74 | 75.87 | 5.23 | 12.12 |

The finished instant cooked grains product of each of the boiling cooking (Comparative Example 1-1), the atmospheric steam cooking (Comparative Example 1-2), and the superheated steam cooking (Example 1) were heated in a microwave oven, and then the sensory quality thereof was evaluated by 8 trained professional panelists. The appearance preference, texture preference, and overall taste preference of the instant cooked grains were evaluated for the evaluation of the sensory quality, and the evaluation results are shown in Table 3 below. The evaluation criteria for the sensory quality were as follows.

[Evaluation criteria]

Appearance preference: With 1 point as the minimum value and 5 points as the maximum value, the higher the appearance preference, the higher the score.

Texture preference: With 1 point as the minimum value and 5 points as the maximum value, the higher the texture preference, the higher the score.

Overall taste preference: It is an item for evaluating overall taste, and with 1 point as the minimum value and 5 points as the maximum value, the better the overall taste, the higher the score.

[Table 3]

|  | Appearance preference | Texture preference | Overall taste preference |
|---|---|---|---|
| Comparative Example 1-1 (boiling cooking) | 3.3 | 3.7 | 3.9 |
| Comparative Example 1-2 (atmospheric steam cooking) | 3.7 | 1.9 | 2.9 |
| Example 1 (superheated steam cooking) | 4.3 | 2.6 | 3.3 |

From the results of the physical properties analysis, it was found that the cooked grains of Comparative Example 1-1 prepared by a typical boiling cooking method had the lowest hardness, and thus, had a soft texture. However, the surfaces of the rice grains were shown to be roughly cracked. Since a long-grain variety characterized by being hard was used, it is presumed that the broken grains of Comparative Example 1-1 were evaluated as rather having a soft mouthfeel. Compared to Comparative Example 1-2, the instant cooked grains of Comparative Example 1-2 prepared by using atmospheric steam had rice grains with relatively smooth surfaces and intact. However, the hardness was high and the rice grain deviation was large, and the texture and overall taste were evaluated as the lowest in the sensory evaluation, so that the quality was poor.

Meanwhile, in the case of the instant cooked grains of Example 1 of the present application, the surface of the grains were smooth and intact, so that the intactness of the grains was the highest, and the same results were obtained for the sensory evaluation of a finished product. In addition, since the hardness and resilience were measured to be high, it was found that excellent texture was maintained without the appearance becoming soft. This is presumed to be due to rapid gelatinization caused by high energy in the process of cooking by using superheated steam, resulting in minimizing the elution of starch. That is, when the physical properties such as hardness of intactness are considered, it was confirmed that the physical properties of the grains of Example 1 of the present application were superior to those of Comparative Examples 1-1 and 1-2.

**[Experimental Example 2] Analysis of difference in physical properties of instant cooked grains according to temperature of superheated steam**

1. Superheated steam cooking with varying temperature of superheated steam

In the preparation method of instant cooked grains of the present application by using superheated steam, the difference in the physical properties of prepared instant cooked grains according to the temperature of the superheated steam is analyzed to confirm superheated steam temperature conditions under which instant cooked grains with a better quality may be prepared.

Specifically, 300 g of a long-grain variety (Vietnamese, Indica rice) was washed and then soaked in water of 40°C for 40 minutes. Thereafter, the soaked rice was drained by using a sieve, and then introduced to a superheated steam cooker to a thickness of 2 cm. At this time, cooking was performed by varying the temperature of superheated steam in the superheated steam cooker to 105°C and 125°C to respectively prepare instant cooked grains of Example 2-1(105°C) and Example 2-2 (125°C). The travel time of a conveyor passing through the superheated steam cooker was set to 10 minutes. After the cooking, water was sprayed through a nozzle during the superheated steam cooking process such that the moisture content of the cooked grains was to be 40%. The discharged prepared cooked grains were sprayed with 3 g of a sunflower emulsifier (6.6%, Dyne Soze) and mixed well. Cooked grains prepared at the above two different temperatures were each placed in a retort container, and water was added thereto such that the moisture content of the instant cooked grains product was to be 60%. Then, the containers were sealed and retort heating was performed thereon. The conditions for the retort heating were 122°C and 21 minutes, and the containers which contained the cooked grains were rotated at 1 rpm in a temperature raising section.

2. Physical properties measurement of semi-finished product

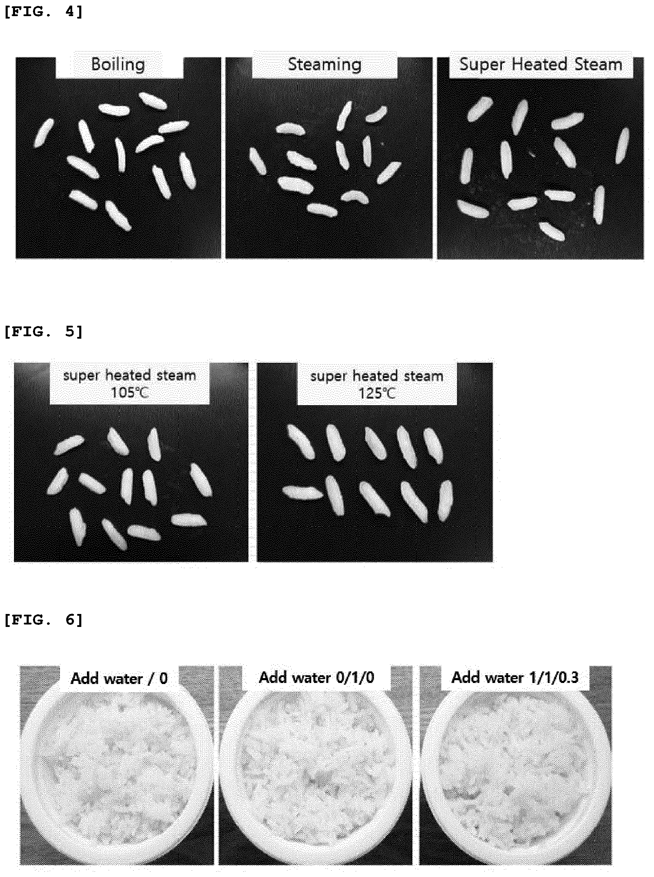

First, for the semi-finished products before the retort heating and after the cooking process, a yield was measured after the cooking of Example 2-1 and Example 2-2 (Table 4), and the appearances of rice grains were observed (FIG. 5).

In addition, for the semi-products before the retort heating, hardness, resilience, adhesion, and stickiness were measured in the same manner as in Experimental Example 1 (Table 5), and L, a, and b values were measured to determine the color by using a device of Konica minolta Co., Ltd. Each measurement was repeated 3 times, and an average value thereof was calculated and shown (Table 6).

[Table 4]

|  | Yield after cooking |
|---|---|
| Example 2-1 semi-finished product (105°C) | 474 g |
| Example 2-2 semi-finished product (125°C) | 520 g |

[Table 5]

|  | Hardness | Resilience | Adhesiv eness | Glutinousne ss |
|---|---|---|---|---|
| Example 2-1 semi-finished product (105°C) | 175.59 | 51.82 | 10.95 | 4.60 |
| Example 2-2 semi-finished product (125°C) | 160.30 | 98.21 | 11.79 | 16.56 |

[Table 6]

|  | L | a | b |
|---|---|---|---|
| Example 2-1 semi-finished product (105°C) | 71.68 | -1.68 | 7.90 |
| Example 2-2 semi-finished product (125°C) | 66.71 | -1.76 | 6.81 |

As a result, from the results of Table 4 above, it was confirmed that the yields of the semi-finished products of Examples 2-1 and 2-2 after the cooking with superheated steam were all numerical values within a suitable range. As described above, a high yield after cooking is due to grains which are soaked in water too much, which is related to a phenomenon in which grains pop. In addition, when the yield is too low, moisture absorption is not achieved at all, so that the amount of moisture to be added after filling a container with grains increases, which may cause the grains to agglomerate during the retort heating process. Therefore, for the quality of a final product, an appropriate level of yield should be obtained from a semi-finished product. The cooked grains in a semi-product state on which processes only up to cooking were performed did not reach an appropriate level to be consumed yet. Example 2-1 cooked by using superheated steam of 105°C exhibited a hardness and a L value close to those of uncooked rice, and only the outer surface of Example 2-1 was observed to be slightly soaked in water. Although Example 2-2 cooked by using superheated steam of 125°C had a high harness, a water retaining film started to form on the surface thereof, creating stickiness, and it was confirmed that Example 2-2 was in the state of steamed rice.

3. Physical properties measurement of finished product

For the instant cooked grains in a finished product state of each of Examples 2-1 and 2-2 which were subjected up to the retort heating, the physical properties related to hardness, resilience, adhesion, and stickiness thereof were measured (Table 7), the colors of grains were measured in the same manner as the color of the semi-finished product (Table 8), and the sensory evaluation for the appearance preference, texture preference, and overall taste preference of the grains was performed in the same manner as in Experimental Example 1 (Table 9).

[Table 7]

|  | Hardness | Resilience | Adhesivene ss | Glutinousn ess |
|---|---|---|---|---|
| Example 2-1 finished product (105°C) | 102.34 | 82.48 | 6.41 | 16.67 |
| Example 2-2 finished product (125°C) | 75.77 | 71.70 | 4.92 | 11.62 |

[Table 8]

|  | L | a | b |
|---|---|---|---|
| Example 2-1 finished product (105°C) | 67.92 | -1.70 | 7.91 |
| Example 2-2 finished product (125 °C) | 68.11 | -1.64 | 8.81 |

[Table 9]

|  | Appearance preference | Texture preference | Overall taste preference |
|---|---|---|---|
| Example 2-1 finished product (105°C) | 3.9 | 2.2 | 2.8 |
| Example 2-2 finished product (125°C) | 3.8 | 2.9 | 3.4 |

When looking at the results of the physical property analysis as described above comprehensively, the instant cooked grains of Example 2-1 cooked by using superheated steam of a temperature of 105°C exhibited relatively high hardness and resilience even after the retort heating. On the contrary, a significant portion of the instant cooked grains of Example 2-2 cooked by using superheated steam of a temperature of 125°C had already undergone the gelatinization of rice even before being introduced to a retort, and had a lower degree of hardness than Example 2-1 even when in a finished product state, thereby exhibiting soft properties, and thus exhibiting excellent texture. This is presumed to be due to rapid gelatinization caused by high energy in the process of cooking by using superheated steam, resulting in minimizing the elution of starch. In general, the gelatinization of starch begins at 60°C to 80°C, and the higher the temperature and pressure, the easier the gelatinization. The above result is determined to be the result of facilitated gelatinization compared to cooking by using superheated steam of a temperature of 125°C within a limited time. That is, in the case of a superheated steam temperature, an effect in terms of physical properties was not exhibited to be excellent at 105°C to 110°C, which is a relatively low temperature. However, when cooking was performed by using superheated steam of a relatively high temperature of 110°C or higher, the effect was excellent by exhibiting a soft texture.

**[Experimental Example 3] Analysis of difference in physical properties of instant cooked grains according to amount of water added during superheated steam cooking**

In the process of cooking by using superheated steam, how the quality of instant cooked grains changes according to the amount of added water was confirmed.

There were three water adding nozzles in a superheated steam cooker used in the present experimental example, and cooking was performed by varying an amount of water sprayed from each nozzle. The amount of water added from 3 nozzles is represented by '#/#/#,' and when an amount of added water is represented by, for example, "1/1/1," it means that water is added at a flow rate of 1 ℓ/min from all 3 nozzles. "1/0/1" means that water is added at a flow rate of 1 ℓ/min from the first and third nozzles, and water is not added from the second nozzle.

300 g of a long-grain variety (Vietnamese Indica rice) was washed and then soaked in water of 40°C for 40 minutes. Thereafter, the soaked rice was drained by using a sieve, and then cooked in a superheated steam cooker. At this time, Example 3-1 was set to the condition of not adding water (0/0/0) and introduced to the superheated steam cooker to a thickness of 2 cm. In the case of Example 3-2, conditions for the three nozzles were set to 1.0/0/0, and in the case of Example 3-3, the water adding nozzle conditions were adjusted to a flow rate of 1.0/1.0/0.3. The temperature of the superheated steam cooker was set to 125°C, and the travel time of a conveyor passing through the superheated steam cooker was set to 10 minutes to perform cooking. The yield after the semi-finished products of Example 3-1, Example 3-2, and Example 3-3 obtained by performing superheated steam cooking were cooked, the filling amount of semi-finished cooked grains in a container, and the filling amount of water added to the container in which the semi-finished cooked grains were filled are shown in Table 10 below.

To the contents shown in Table 10, the prepared cooked grains were placed in a retort container, and then water was added such that the moisture content of a product was to be 60%, followed by sealing the container to perform retort heating. In order to obtain a similar F0, conditions for retort heating were varied to be 13 minutes at 123°C in Example 3-1, 15 minutes at 123°C in Example 3-2, and 18 minutes at 123°C in Example 3-3. The containers were all rotated at 1 rpm in a temperature raising section. As a result of performing retort heating according to each condition, the F0 value appeared uniform at a level of 5 to 9. In addition, various physical properties (Table 11) and chromaticity (Table 12) were measured and sensory evaluation (Table 13) was performed in the same manner as in Experimental Examples 1 and 2 for the finished instant cooked grains of Examples 3-1 to 3-3. In addition, the appearances of the final instant cooked grains products were captured and compared (FIG. 4).

[Table 10]

|  | Yield after cooking | Cooked grains filling amount | Water filling amount |
|---|---|---|---|
| Example 3-1 (semi-finished product) | 422 g | 98.3 g | 51.7 g |
| Example 3-2 (semi-finished product) | 509 g | 118.5 g | 31.5 g |
| Example 3-3 (semi-finished product) | 548 g | 125 g | 25 g |

[Table 11]

|  | Hardness | Resilien ce | Adhesivenes s | Glutinousne ss |
|---|---|---|---|---|
| Example 3-1 (finished product) | 64.33 | 56.20 | 4.84 | 9.79 |
| Example 3-2 (finished product) | 72.54 | 66.11 | 4.88 | 11.11 |

(continued)

|  | Hardness | Resilien ce | Adhesivenes s | Glutinousne ss |
|---|---|---|---|---|
| Example 3-3 (finished product) | 53.35 | 54.10 | 5.60 | 12.12 |

[Table 12]

|  | L | a | b |
|---|---|---|---|
| Example 3-1 (finished product) | 68.62 | -1.80 | 8.04 |
| Example 3-2 (finished product) | 70.35 | -1.61 | 8.47 |
| Example 3-3 (finished product) | 71.50 | -1.48 | 8.63 |

[Table 13]

|  | Appearance preference | Texture preference | Overall taste preference |
|---|---|---|---|
| Example 3-1 (finished product) | 4.0 | 3.0 | 3.1 |
| Example 3-2 (finished product) | 3.7 | 3.3 | 3.2 |
| Example 3-3 (finished product) | 4.0 | 3.5 | 3.6 |

In the case of cooked grains cooked without adding water as in Example 3-1, the total moisture content of semi-finished cooked grains was measured to be 39%, and in the case of Example 3-2, the total moisture content of semi-finished cooked grains was measured to be 49%. In the case of Example 3-3, the total moisture content of semi-finished cooked grains was measured to be 53%. The lower the moisture content of cooked grains of a semi-finished product cooked by using superheated steam, the more water is added before retort heating and after the preparation of the semi-finished product in order to meet the moisture content of a final product, which is 60%. The amount of such added water may affect the quality of the final finished product. The finished product of Example 3-1, which had the lowest water content, and thus required the largest amount of additional water to be added, appeared in the form of lumped cooked grains, and thus, also had a problem with sensory quality. The finished product of Example 3-2 was improved in comparison thereto, but still had a soft texture. The finished product of Example 3-3 was superior in hardness, adhesion, and stickiness compared to the finished products of Examples 3-1 and 3-2, and exhibited a darker and more yellow color compared to the above two finished products. However, the sensory evaluation results showed no significant difference in appearance preference score.

In the case of texture, the product of Examples 3-3 was confirmed to have an excellent texture with no soft texture and no agglomerated form unlike Examples 3-1 and 3-2.

In the case of Examples 3-3 which required the largest amount of added water during the superheated steam cooking, lowered hardness is presumed to be due to more progressed gelatinization caused by adding water during the cooking process by using superheated steam, and for this reason, the texture was exhibited to be the best in the sensory evaluation. In the case of chromaticity, the more the added water, the higher the L value and the b value. This seems to be due to the expansion of grains caused by sufficient gelatinization, which allowed the colors of the grains to be brighter, and at the same time, due to the increase in retort heating time, which increased the degree of yellowness.

**[Experimental Example 4] Analysis of physical properties of instant cooked grains according to whether liquid sauce is pre-mixed**

1. Scheme of experiment

In a process of preparing instant cooked grain to which a liquid sauce is added, the instant cooked grains were prepared by varying the time of adding the liquid sauce, and the physical properties of the prepared instant cooked grains were comparatively analyzed.

Specifically, in the case of pre-mixing a sauce, a portion of the sauce was added and mixed first with raw materials cooked by using superheated steam, and then the other portion of the sauce was mixed with cooking water and added to prepare instant cooked grains. In the case of not performing pre-mixing, a sauce was mixed only with cooking water and added to cooked raw materials to prepare instant cooked grains.

In addition, it was experimented to determine whether there was a difference in physical properties depending on whether or not an inverting process was performed after sealing. Accordingly, four types of instant cooked grains were prepared under the following conditions shown in Table 14.

[Table 14]

|  | Pre-mixing | Inversion | Amount of rice or amount of mixed rice | Oil | Curry sauce |
|---|---|---|---|---|---|
| Example 4-1 | X | X | 99.5 g | 2 g | 48.5 g |
| Example 4-2 | X | ○ | 99.5 g | 2 g | 48.5 g |
| Example 4-3 | ○ | X | 104.35 g | 2 g | 43.65 g |
| Example 4-4 | ○ | ○ | 104.35 g | 2 g | 43.65 g |

2. Adding sauce without pre-mixing process : Example 4-1 and Example 4-2 In order to prepare instant cooked grains of each of Example 4-1 and Example 4-2 without a sauce pre-mixing process, 300 g of a long-grain variety was washed and then soaked in water of 40°C for 40 minutes. Thereafter, the soaked rice was drained by using a sieve, and then introduced to a superheated steam cooker to a thickness of 2 cm. The temperature of a superheated steam cooker was set to 125°C, and the travel time of a conveyor was set to 10 minutes. Water was sprayed during a superheated steam cooking process such that the moisture content after the cooking was to be 40%. In the case of Example 4-1 and Example 4-2 in which the pre-mixing process was not performed, cooking oil (soybean oil, Baeksul) and a curry sauce (3-min Vermont Curry, Ottogi) were mixed with cooking water in an amount according to Table 14, and then added to cooked grains prepared by using the superheated steam, followed by sealing a container. In the case of Example 4-1, an inverting process was performed after the sealing, and in the case of Example 4-2, an inverting process was further performed after the sealing. The inverting process was performed by a process of waiting for 3 minutes after introducing a sauce to a container, sealing the container and inverting the same, leaving the container in the inverted state for 5 minutes, and then putting the container back to its original position. Thereafter, retort heating was performed on the sealed container. Retort heating conditions were set to 123°C for 18 minutes, and rotation of the sealed container was performed at 1 rpm in a temperature raising section.

3. Adding sauce by pre-mixing process : Example 4-3 and Example 4-4

In the case of Examples 4-3 and 4-4 prepared by pre-mixing a sauce, an amount of a sauce corresponding to 10% of the total amount of the sauce to be added to a product was first mixed with cooked grains by using superheated steam, and then the remaining sauce and cooking oil were mixed with cooking water to be finally mixed in a mixing ratio according to Table 14 above and added to a container, and the container was sealed. In the case of Example 4-3, an inverting process was performed after the sealing, and in the case of Example 4-4, an inverting process was further performed after the sealing. The inverting process was performed by a process of waiting for 3 minutes after introducing a sauce to a container, sealing the container and inverting the same, leaving the container in the inverted state for 5 minutes, and then putting the container back to its original position. Thereafter, retort heating was performed on the sealed container. Retort heating conditions were set to 123°C for 18 minutes, and rotation of the sealed container was performed at 1 rpm in a temperature raising section.

4. Results of experiments

Appearances of the finished instant cooked grains products of Examples 4-1 to 4-4 prepared as described above were observed. As a result, it was confirmed that the product in which the sauce pre-mixing and the inverting after sealing were both performed (Example 4-4) had the most uniform appearance, and it was confirmed that color deviation occurred within the products in the order of the product in which the source pre-mixing was performed but the inverting was not performed (Example 4-3), the product in which the pre-mixing was not performed but the inverting was performed (Example 4-2), and the product in which the pre-mixing was not performed and the inverting was not performed (Example 4-1). From the results, it was confirmed that the process of pre-mixing a sauce greatly affects the appearance of a product, and the process of inverting after sealing has an excellent effect of minimizing the vertical color deviation within a product.

**[Experimental Example 5] Analysis of physical properties of instant cooked grains depending on time of spraying emulsifier**

1. Scheme of experiment

In order to confirm the difference in quality depending on the time of spraying an emulsifier, by using a long-grain jasmine variety as a raw material, instant cooked grains were prepared by spraying an emulsifier at each time before and after a superheated steam cooking step, and then the degree of separation of grains was confirmed and compared. The degree of separation of the grains was confirmed by measuring the weight of grains lumped to 3 grains or less out of 50 g of cooked rice.

2. Preparation of instant cooked grains by varying time of adding emulsifier : Example 5-1 to Example 5-3

First, in order to prepare Example 5-1 in which an emulsifier was not added, 300 g of long-grain jasmine was washed and then soaked in water of 40°C for 40 minutes. Thereafter, the soaked rice was well drained by using a sieve, and then introduced to a superheated steam cooker to a thickness of 2 cm. At this time, the temperature of the superheated steam cooker was set to 125°C, and the travel time of a conveyor was set to 10 minutes. Superheated steam cooking was performed under the condition in which water was not to be added. Then, instant cooked grains were prepared without separately adding an emulsifier.

In the case of Example 5-2, an emulsifier was sprayed before the superheated steam cooking to prepare instant cooked grains. Specifically, in the case of Example 5-2, the preparation was performed in the same manner as in Example 5-1, except that 10 g of a sunflower emulsion (6.6%, Dyne Soze) was sprayed on 300 g of long-grain jasmine before the superheated steam cooking, and then mixed well to perform cooking with superheated steam.

In the case of Example 5-3, an emulsifier was sprayed after the superheated steam cooking to prepare instant cooked grains. Specifically, in the case of Example 6-3, the preparation was performed in the same manner as in Example 5-1, except that a sunflower emulsion (6.6%, Dyne Soze) was sprayed on and mixed with 30 g of cooked grains after the superheated steam cooking.

3. Results of experiments

For the instant cooked grains in a semi-finished state which were cooked and mixed with an emulsifier according to Examples 5-1 to 5-3, the yield thereof after the cooking, the filling amount of cooked grains, and the filling amount of water were measured and shown (Table 15). In the case of Example 5-1, the yield after cooking without adding an emulsifier, in the case of Example 5-2, the yield after cooking by adding an emulsifier, and in the case of Example 5-3, the yield after cooking and then adding an emulsifier were measured respectively.

[Table 15]

| | Yield after cooking | Cooked grains filling amount | Water filling amount |
|---|---|---|---|
| Example 5-1 | 328.8 g | 89 g | 61 g |
| Example 5-2 | 335.8 g | 89 g | 61 g |
| Example 5-3 | 364.6 g | 98 g | 52 g |

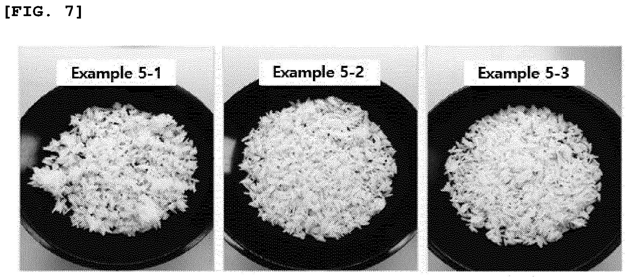

For the instant cooked grains in a semi-finished product state, the appearances thereof were captured to be compared (FIG. 7), and the degrees of grain separation (%) thereof were measured and shown in Table 16 below. The degree of separation (%) is a ratio calculated as a percentage (%), the ratio of an amount of rice separated into 3 or less grains out of 50g of cooked rice.

[Table 16]

| | Degree of grain separation |
|---|---|
| Example 5-1 | 55.84 |
| Example 5-2 | 73.08 |
| Example 5-3 | 84.06 |

As a result, with respect to the degree of grain separation, Example 6-3 in which an emulsifier was sprayed after cooking showed 84.06%, Example 6-2 in which an emulsifier was sprayed before cooking showed 73.08%, and Example 6-1 in which an emulsifier was not sprayed showed 55.84%. Therefore, it was confirmed that when instant cooked grains were prepared by spraying an emulsifier after cooking, it was easier to separate grains. During cooking by using superheated steam, water is sprayed through a water adding nozzle to allow cooked grains with a moisture content of about 40% to be discharged. At this time, when an emulsifier is sprayed before the cooking, the emulsifier is washed off during the water adding process, so that an effect of grain separation seems to less effective than when an emulsifier is sprayed after the cooking. However, depending on the time at which an emulsifier is introduced, the effect of grain separation may appear differently, and the time at which an emulsifier is introduced may be selected and used according to the type of rice used.

In the above, representative embodiments of the present application have been exemplarily described, but the scope of the present application is not limited to the specific embodiments as described above. It will be understood by those of ordinary skill in the art that appropriate changes may be made within the scope of the claims of the present application.

## Claims

1. A method for preparing instant cooked grains, the method comprising the steps of:

   washing raw materials and immersing the raw materials in water, wherein the raw materials include rice and one or more grains other than rice;
   cooking the immersed raw materials by using superheated steam;
   sealing a container containing the cooked raw materials; and
   retort heating the sealed container.

2. The method of claim 1, wherein the step of cooking by using superheated steam comprises the step of adding water to the raw materials.

3. The method of claim 2, wherein the process of applying superheated steam to the raw materials and the process of adding watering to the raw materials are performed simultaneously.

4. The method of claim 2, wherein in the step of adding water to the raw materials, the adding of water is performed in a spraying manner.

5. The method of claim 4, wherein the adding of water is performed through 1 to 10 spray nozzles.

6. The method of claim 1, wherein in the step of cooking by using superheated steam, the temperature of the superheated steam is 110°C to 130°C.

7. The method of claim 1, wherein the step of cooking by using superheated steam is performed for 2 minutes to 10 minutes.

8. The method of claim 1, wherein the water adding ratio of semi-finished cooked grains obtained after the step of cooking using the superheated steam is 45% to 90%.

9. The method of claim 1, wherein the moisture content of semi-finished cooked grains obtained after the step of cooking using the superheated steam is 35% to 58%.

10. The method of claim 1, further comprising, before the step of sealing a container containing the cooked raw materials, the step of adding cooking water to the container containing the cooked raw materials.

11. The method of claim 1, wherein the step of retort heating comprises heating the sealed container at a temperature of 110°C to 130°C for 10 minutes to 35 minutes.

12. The method of claim 1, further comprising the step of adding an emulsifier.

13. The method of claim 12, wherein the step of adding an emulsifier is performed before the step of cooking by using superheated steam or after the step of cooking by using superheated steam.

14. The method of claim 1, further comprising the step of mixing a source with the raw materials.

15. The method of claim 14, wherein the step of mixing a sauce with the raw materials is performed after the step of cooking by using superheated steam.

16. The method of claim 1, further comprising, after the sealing step, the step of inverting the sealed container.

17. The method of claim 1, wherein the rice is either a long-grain variety or a short-grain variety.

18. The method of claim 1, wherein the container is either a pouch or a tray-type container.

19. The method of claim 18, wherein after cooked by using superheated steam, the raw materials are filled in a pouch.

20. The method of claim 18, wherein before the step of cooking by using superheated steam, the raw materials are filled in a tray-type container.

21. Instant cooked grains prepared by the preparation method according to any one of claim 1 to claim 20.

22. The instant cooked grains of claim 21, wherein the cooked grains are selected from the group consisting of cooked rice, seasoned cooked grains, and mixed cooked grains.

[FIG. 1]

```
┌─────────────────────────┐
│   Wash Rice/Immerse      │
└─────────────────────────┘
             │
┌─────────────────────────┐
│   Superheated Steam      │
│   Cooking                │
└─────────────────────────┘
             │
┌─────────────────────────┐
│          Seal            │
└─────────────────────────┘
             │
┌─────────────────────────┐
│     Retort Heating       │
└─────────────────────────┘
```

[FIG. 2]

### \<LONG GRAIN\>

| Wash Rice/Immerse |
| :---: |
| Superheated Steam Cooking, 125°C, 5 min, Add Water |
| Seal |
| Invert 2 times |
| Retort Heating |

### \<JASMINE\>

| Wash Rice/Immerse |
| :---: |
| Superheated Steam Cooking, 125°C, 5 min, Not Add Water |
| Seal |
| Invert 2 times |
| Retort Heating |

[FIG. 3]

### \<SEASONED COOKED RICE\>

| Wash Rice/Immerse |
| :---: |
| Superheated Steam Cooking |
| Mix and Fill Solid Material |
| Fill Cooking Water |
| Seal / Invert |
| Retort Heating |

[FIG. 4]

[FIG. 5]

[FIG. 6]

[FIG. 7]

## INTERNATIONAL SEARCH REPORT

| International application No. |
|---|
| **PCT/KR2021/014827** |

| **A.** | **CLASSIFICATION OF SUBJECT MATTER** |
|---|---|

**A23L 7/196**(2016.01)i; **A23L 5/10**(2016.01)i; **A23L 29/10**(2016.01)i; **A23L 23/00**(2016.01)i

According to International Patent Classification (IPC) or to both national classification and IPC

| **B.** | **FIELDS SEARCHED** |
|---|---|

Minimum documentation searched (classification system followed by classification symbols)

A23L 7/196(2016.01); A23L 1/10(2006.01); A23L 29/10(2016.01); A47J 27/14(2006.01); A47J 27/16(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 쌀(rice), 과열증기(superheated steam), 실링(sealing), 레토르트(retort), 즉석밥 (instant cooked grain), 스프레이(spray), 수분함량(water concentration), 소스(sauce), 유화제(emulsifier), 용기(container), 파우치(pouch), 장립종(indica), 단립종(japonica)

| **C.** | **DOCUMENTS CONSIDERED TO BE RELEVANT** |
|---|---|

| Category* | Citation of document, with indication, where appropriate, of the relevant passages | Relevant to claim No. |
|---|---|---|
| X | JP 2011-239753 A (HOUSE FOODS CORP.) 01 December 2011 (2011-12-01) See paragraphs [0013]-[0017], [0020] and [0027]-[0035]. | 1,6-11,14-22 |
| Y | | 2-5,12,13 |
| Y | JP 2019-180829 A (ACE SYSTEM CO., LTD.) 24 October 2019 (2019-10-24) See paragraphs [0026]-[0031], [0037] and [0052]-[0058]; and figure 1. | 2-5 |
| Y | KR 10-2014-0083343 A (NONGSHIM CO., LTD.) 04 July 2014 (2014-07-04) See claims 1 and 7. | 12,13 |
| A | JP 2001-169915 A (ACE SYSTEM CO., LTD. et al.) 26 June 2001 (2001-06-26) See claims 1-5. | 1-22 |
| A | WO 2017-037799 A1 (FORICA FOODS CO., LTD.) 09 March 2017 (2017-03-09) See claims 1-7. | 1-22 |

☐ Further documents are listed in the continuation of Box C.    ☑ See patent family annex.

| * | Special categories of cited documents: | | "T" | later document published after the international filing date or priority date and not in conflict with the application but cited to understand the principle or theory underlying the invention |
|---|---|---|---|---|
| "A" | document defining the general state of the art which is not considered to be of particular relevance | | | |
| "D" | document cited by the applicant in the international application | | "X" | document of particular relevance; the claimed invention cannot be considered novel or cannot be considered to involve an inventive step when the document is taken alone |
| "E" | earlier application or patent but published on or after the international filing date | | | |
| "L" | document which may throw doubts on priority claim(s) or which is cited to establish the publication date of another citation or other special reason (as specified) | | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | | |
| "P" | document published prior to the international filing date but later than the priority date claimed | | "&" | document member of the same patent family |

| Date of the actual completion of the international search | Date of mailing of the international search report |
|---|---|
| **11 April 2022** | **11 April 2022** |

| Name and mailing address of the ISA/KR | Authorized officer |
|---|---|
| **Korean Intellectual Property Office** **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

<div align="center">

**INTERNATIONAL SEARCH REPORT**
**Information on patent family members**

</div>

| International application No. |
| --- |
| **PCT/KR2021/014827** |

| Patent document<br>cited in search report | | | Publication date<br>(day/month/year) | Patent family member(s) | | | Publication date<br>(day/month/year) |
| --- | --- | --- | --- | --- | --- | --- | --- |
| JP | 2011-239753 | A | 01 December 2011 | JP | 5394983 | B2 | 22 January 2014 |
| JP | 2019-180829 | A | 24 October 2019 | None | | | |
| KR | 10-2014-0083343 | A | 04 July 2014 | KR | 10-1416607 | B1 | 08 July 2014 |
| JP | 2001-169915 | A | 26 June 2001 | JP | 3172519 | B1 | 04 June 2001 |
| WO | 2017-037799 | A1 | 09 March 2017 | CN | 107920564 | A | 17 April 2018 |
| | | | | JP | 6454421 | B2 | 23 January 2019 |

Form PCT/ISA/210 (patent family annex) (July 2019)

**EP 4 144 226 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020160077661